# EUROPEAN PATENT SPECIFICATION

(11) **EP 0 678 548 B1**
(45) Date of publication and mention of the grant of the patent: **22.09.1999**
(21) Application number: 95105748.8
(22) Date of filing: 18.04.1995
(51) Int. Cl.: C08K 3/00, C08L 101/00, A01N 59/26, A01N 59/16, A46D 1/00

(54) **Antimicrobial materials**
Antimikrobielle Materialien
Matériaux antimicrobiennes

(30) Priority: 19.04.1994 GB 9407737
(43) Date of publication of application: 25.10.1995
(73) Proprietor: UNILEVER PLC, London EC4P 4BQ (GB); UNILEVER N.V., 3013 AL Rotterdam (NL)
(72) Inventor: Carr, Stuart William, Unilever Res. Port Sunlight, Wirral, Merseyside, L63 3JW (GB); Franklin, Kevin Ronald, Unilever Res. Port, Wirral, Merseyside, L63 3JW (GB); Lambert, Ronald Joseph, Unilever Res. Colworth Lab, Sharnbrook, Bedford, MK44 1LQ (GB)
(74) Representative: Kan, Jacob Hendrik

(56) References cited:
- GB-A- 2 267 085
- GB-A- 2 268 063
- DATABASE WPI Section Ch, Week 9320 Derwent Publications Ltd., London, GB; Class D22, AN 93-164141 XP002007483 & JP-A-05 097 414 (TOA GOSEI CHEM IND LTD) , 20 April 1993
- DATABASE WPI Section Ch, Week 9409 Derwent Publications Ltd., London, GB; Class A82, AN 94-072114 XP002007484 & JP-A-06 025 561 (TOA GOSEI CHEM IND LTD) , 1 February 1994
- DATABASE WPI Section Ch, Week 9442 Derwent Publications Ltd., London, GB; Class A17, AN 94-338403 XP002007996 & JP-A-06 263 916 (TOA GOSEI CHEM IND LTD) , 20 September 1994
- DATABASE WPI Section Ch, Week 9120 Derwent Publications Ltd., London, GB; Class A60, AN 91-146141 XP002007997 & JP-A-03 083 906 (TOA GOSEI CHEM IND LTD) , 9 April 1991

## Description

This invention relates to antimicrobial compounds, and to utilities of such compounds. In its broadest sense, it relates to the use of a known category of materials for a new and unexpected purpose. In certain embodiments, it relates to polymer articles which may have antimicrobial activity. More particularly in these specific embodiments it refers to organic polymers which contain specific ion exchange structures. In a preferred embodiment, it relates to polymer articles, in particular toothbrush filaments, which comprise this category of ion exchange structures.

It is well known that various metal ions, such as silver, copper and zinc ions have antimicrobial activity. However a problem that may be encountered in using such ions for their antimicrobial effect is how best to store, hold and release the metal ions in the environment in which they are being used.

It has previously been suggested that such metals could be incorporated into polymeric materials by adding the metals as fine wires or particles to the polymeric material. However this has usually proved unsatisfactory, as the metals themselves show poor compatibility with the polymer materials, because the specific weights and the Youngs moduli of the metals are usually high compared with those of conventional polymers.

It has also been suggested, for example in EP 116 865 (Kanebo), that zeolites containing antimicrobial metals releasably bound at ion exchange sites in the zeolite may be incorporated into a polymer. However, we have found that such materials generally have a relatively poor release rate of silver from the polymer article. The antimicrobial effect that the zeolite is able to provide the polymer article is therefore relatively poor.

JP-A-6 263 916 (Toa Gosei Chem Ind Ltd.) describes a bacteriostatic and bacteria resistant resin composition for food container, etc., comprising an inorganic ion exchanger containing silver ion and another ion exchanger devoid of silver ion giving high mildew resistance.

It is an object of the invention to overcome at least some of the problems conventionally associated with prior art polymer materials, and in particular to provide polymer articles which comprise structures which provide a better release of antimicrobial metal ions into or onto the polymer article in which they are incorporated.

Thus, according to the invention in its broadest sense, there is provided a toothbrush or toothbrush filament comprising a polymer having a antimicrobial property, the polymer comprising a solid state ion exchange of general formula :

A_{1+X+y}B_{2-X}C_{X}(PO₄)_{3-y}(SiO₄)_{y}

wherein
A = one or more monovalent ions
B = one or more tetravalent ions
C = one or more trivalent ions,
x is between 0 and 1 inclusive, and need not be an integer
y is between 0 and 3 inclusive, and need not be an integer.

Such solid state ion exchange structures may be generally known as Nasicons. Useful ion exchange structures for use according to the invention may optionally additionally comprise small amounts of divalent ions.

Highly preferred monovalent ions for use in the solid state ion exchanger are alkali metals such as lithium and sodium, ammonium, hydrogen, copper (I) and silver, but in particular silver, copper, and sodium, or mixtures thereof, and especially (when mixtures of monovalent ions are used) mixtures of silver and copper. Preferred tetravalent ions for use in the ion exchange structure include titanium, zirconium, hafnium and tin, in particular titanium and zirconium.

Preferred trivalent ions for use in the ion exchange structure include chromium, aluminium, scandium, yttrium, iron, lanthanum, and boron. Highly preferred trivalent ions are aluminium and scandium.

Such ion exchange structures may also have a broad spectrum effect, being active against both gram negative and gram positive bacteria, and may also provide a preservative effect against molds, yeasts and fungi.

A particularly preferred form in which the polymer article may be used is as a toothbrush filament, in which the ion exchange structure has been either incorporated into the body of the filament, or is coated to at least part of the surface. Alternatively, the ion exchange structure may be incorporated into either the brush handle Ion exchange structures of the type described in the invention are well known. For example, the crystal structure for NaZr₂(PO₄)₃ was first solved by Hagman and Kierkegaard in 1968, as described in Acta. Chem. Scan. 22 (1966) 1822. Subsequently many similar materials have been prepared and their preparations and properties described in the literature, for example "Crystal Chemistry of the NaZr₂(PO₄)₃, NZP or CTP structure family", Alamo and Ray, Journal of Materials Science 21 (1986), 444-450, and "Controlled Combustion Synthesis and Properties of Fine-particle NASICON Materials", Arul Dhas and Patil, J. Mater. Chem, 1994, 4 (3) 491-497. Other references include "Preparation and Structural Properties of the Solid State Ionic Conductor CuTi₂(PO₄)₃", Mbandza, Boardes and Courtine, Mat. Res. Bull, Vol. 20 pp 251-257 (1985), "Synthesis and Study of New Compounds (M^{I})(N^{IV})₂(PO₄)₃ with Nasicon-like structure (M=Ag, Cu; N=Ge, Hf, Sn, Ti, Zr)", Winand, Rulmont and Torte. Journal of Solid State Chemistry, 107, 351-361 (1993), and "Crystal Structures and Crystal Chemistry in the system Na_{1+X}Zr₂Si_{X}P_{3-X}O₁₂", Hong, Mat. Res. Bull. Vol 11, pp 173-182 (1976). The contents of all of these articles is incorporated herein by reference.

Ion exchange structures for use according to the invention may be made by any applicable method, and may be made either directly, or by ion exchange with a suitable similar structure.

Preferred structures for use in toothbrush filaments according to the invention are AgTi₂(PO₄)₃, AgZr₂(PO₄)₃, Ag_{1.3} Ti_{1.7}Al_{0.3}(PO₄)₃ and Na_{0.5}Ag_{0.5}Zr₂(PO₄)₃, or analogues in which the silver is either wholly or partially substituted with copper.
In preferred ion exchange structures for use according to the invention, A comprises at least 0.1 parts of either silver or copper atoms (i.e. in A_{1+X+y}B_{2-X}Cₓ(PO₄)_{3-y}(SiO₄)_{y}, A comprises at least either Ag_{0.1}or Cu_{0.1}).

We have found that the incorporation of such ion exchange structures into polymers provides the polymer with a remarkably high level of microbial resistance. Ion exchange materials used in accordance with the invention may be effective when present in substrates at levels greater than 100ppm. It is preferred that they may used in accordance with the invention in compositions or articles at levels of up to 10% by weight, and may conveniently be used at levels of at least 0.00001% by weight.

Furthermore, it has been found possible to regulate the rate of silver release from the ion exchange structure, and hence modify the antimicrobial properties of the polymer, by making small changes in the composition of the solid state network. For example, changing AgTi₂(PO₄)₃ to AgZr₂(PO₄)₃ was found to decrease the rate of release of silver ions. This effect can be used beneficially in the construction of the article comprising the polymer, by tailoring the rate of release of the antimicrobial metal ion from the ion exchange structure for specific purposes. It has been found that a relatively high rate of release of silver may be attained in ion exchange structures containing silver when A=Ag and x=0.3.

The polymer used for manufacturing the polymer according to the invention may be any thermoplastic or thermosetting plastic or resin, such as polyethylene, polypropylene, polyvinyl chloride, ABS resin, nylons, polyesters, polyvinylidene chloride, polyamides, polystyrene, polyacetals, polyvinyl alcohol, polycarbonate, acrylic resins, fluoroplastics, polyurethane elastomer, urea resins, phenolic resins, melamine resins, unsaturated polyester resins, expoxy resins, urethane resins, rayons acetates, triacetates, vinylidene and natural or synthetic rubbers. When the polymer article is a toothbrush filament, the preferred polymers are nylon or polypropylene.

Conveniently the ion exchange structures are added to the polymer either by admixing the structure with the polymer at any stage prior to molding the polymer, or by treating the molded polymer with a composition containing the ion exchange structure such that some is retained on the molded article surface.

### Examples

The invention will now be further described by way of example only.

### Ion Exchange Structure Preparation

Silver titanium phosphate and silver aluminium titanium phospate were prepared according to the following procedure.

Ag_{1.3}Al_{0.3}Ti_{1.7}(PO₄)₃

AgNO₃(8.17g), TiO₂(5.03g), Al₂O₃(0.336g) and NH₄H₂PO₄ (12.78g) were ground together in heptane; the solvent was then evaporated off. The mixture was then heated to 800°C for 2 hours. After cooling, the sample was ground up and then heated at 1100°C for 15 hours. The resultant solid was reground and ball milled (dry process). The analysis was confirmed by X-ray diffraction.

### Ag Ti₂(PO₄)₃

This was prepared by an analagous method to that described above, omitting the alumina and using the correct stoichiometric amounts. A copper analogue, CuTi₂(PO₄)₃, can also be prepared using Copper (I) oxide.

The resulting ion exchange structures can be incorporated into toothbrush bristles by adding the ground up ion exchange material to a polymer melt, and extruding. In such usages, it is preferable that the particle size of the ion exchange material is less than 10 microns, highly preferably less than 5 microns.

### Experimental

### Example 1

The test organism used was Escherichia coli. The bacteria were grown on heart infusion agar, then tryptone soy broth for 24 hours at 30° C. Cell suspensions were prepared by centrifugation of 24 hour cultures and resuspension in 1/10 the original volume of deionoised water.

Aliquots (5 ml) were measured out and added to 20 mls of 0.1% silver solid state ion exchanger solution. Contact time was one hour, and after this counts were done on heart infusion agar after it has incubated at 37° C for three days.

### Results

| Nasicon | Test Solution | E Coli / log survivors |
|---|---|---|
| Control | 0.1% KNO₃ | 7.54 |
| | Nutrient Broth | 7.60 |
| | Dist. Water | 7.34 |
| AgTP* | 0.1% KNO₃ | 3.95 |
| | Nutrient Broth | 6.27 |
| | Dist. Water | 3.38 |
| AgTAP** | 0.1% KNO₃ | <2.6 |
| | Nutrient Broth | 5.64 |
| | Dist. Water | <2.6 |

| | | |
|---|---|---|
| * AgTi₂(PO₄)₃, prepared as described above. | | |
| ** Ag_{1.3}Ti_{0.3}Al_{0.3}(PO₄)₃, prepared as described above. | | |

These results demonstrate that silver Nasicons are highly efficient at killing E. Coli. This is in contrast to silver zeolites, which fail to release any appreciable amounts of silver ions. The rate at which they kill E. Coli was found to be greater with AgTAP than AgTP, as AgTAP demonstated a higher rate of release of silver ions than AgTP.

### Example 2

Rapid Automated Bacterial Impedance Assay (RABIT) - Indirect Method.

Nasicons Evaluated (1-10u)
- Ag1.3 A10.3Ti1.7(PO₄)₃ [code 9200/77]
- Ag Ti2 (PO₄)₃ [code 9200/78]

Nasicon Solutions - 0.05% and 0.10% in 0.01M phosphate buffer pH 7.

### Test Organisms

(a) Candida parapsilosis 8.5 x 10⁷ (in sterile distilled water)
(b) Eschericia coli 6.2 x 10⁹ (in sterile distilled water)
(c) Serratia marcesans 2.6 x 10⁸ (in sterile distilled water)

### Method

9.5 ml of Nasicon solution inoculated with 0.5ml of test organism and stirred for 1 hour at 37°C or 28°C (organism-determined temperature).

0.1 ml samples removed for indirect RABIT analysis on Tryptone soya agar or dextrose agar slopes (organsim determined) over 48 hours to investigate survival of organisms.

### Results

All test organisms remained viable and metabolically active when stirred in phosphate buffer alone control.

Nasicon 9200/77 at 0.05% inhibited organisms (a), (b) and (c).

Nasicon 9200/78 at 0.05% showed similar inhibitory activity to 9200/77 against organisms (a), (b) and (c).

At a concentration of 0.10%, both 9200/77 and 9200/78 inhibited the growth of all organisms.

### Example 3

Zonal Inhibition Assay - Eschericia Coli.

Nasicons Evaluated (1-10u)
(a) Ag Zr₂ (PO₄)₃
(b) Ag Ti2 (PO₄)₃
(c) Ag1.3 A10.3 Zr1.7 (PO₄)₃
(d) Ag1.3 A10.3 Ti1.7 (PO₄)₃

Nasicon State - 1.0% in toothbrush nylon monofilaments.

### Method

MacConkey agar plates inoculated with an overnight culture of Eschericia coli and excess surface moisture allowed to evaporate 1-5mm lengths of monofilament carefully dropped onto the agar surface, and plates incubated overnight at 37°C.

### Results

Plates 'treated' with Nasicon-free monofilaments were characterised by continuous E. Coli growth, interrupted only by the physical surface presence of monofilaments.

Plates treated with Nasicon-containing filaments were characterised by 'zones' of inhibited growth surrounding the filaments, which extended in the range of 1-5mm from the surface.

### Example 4

Saliva Microorganism Assay.

Nasicon Evaluated (1-10u) - AgTi2 (PO₄)₃

Nasicon State - 1.0% in toothbrush nylon monofilaments incorporated into filament bundles (witches broom-type arrangement).

### Method

Nasicon containing filaments and control filaments were dipped into pooled fresh saliva, excess saliva allowed to drain away and toothbrushes inverted (head uppermost) to allow drying with time.

Toothbrushes removed with time and levels of aerobic microorganisms determined from spiral plating on Columbia agar.

### Results

| Time (Hours) | Log cfu's Nasicon | Log cfu's Control |
|---|---|---|
| 0.00 | 6.71 | 6.69 |
| 3.91 | 5.84 | 6.18 |
| 7.58 | 3.34 | 5.45 |
| 24.25 | 3.14 | 4.55 |
| cfu = colony forming units. | | |

## Claims

1. A toothbrush or toothbrush filament comprising a polymer having an antimicrobial property, the polymer comprising 0.00001-10% by weight of a solid state ion exchanger of general formula:
A_{1+X+y}B_{2-X}C_{X}(PO₄)_{3-y}(SiO₄)_{y}
wherein
A = one or more monovalent ions
B = one or more tetravalent ions
C = one or more trivalent ions,
x is between 0 and 1 inclusive, and need not be an integer
y is between 0 and 3 inclusive, and need not be an integer.

2. A toothbrush or toothbrush filament according to claim 1 wherein A comprises silver, copper, or sodium, or mixtures thereof.

3. A toothbrush or toothbrush filament article according to claim 1 or claim 2 wherein B comprises titanium, zirconium, hafnium or tin.

4. A toothbrush or toothbrush filament article according to any of the preceding claims, wherein C comprises aluminium or scandium.

5. A toothbrush or toothbrush filament article according to any of the preceding claims, wherein A_{1+X+y} comprises at least either Cu_{0.1} or Ag_{0.1}.

6. A toothbrush or toothbrush filament article according to any of the preceding claims, wherein the ion exchanger comprises AgTi₂(PO₄)₃, AgZr₂(PO₄)₃, Ag_{1.3}Ti_{1.7}Al_{0.3}(PO₄)₃, or Na_{0.5}Ag_{0.5}Zr₂(PO₄)₃, or analogues in which the silver is partially or totally substituted with copper.

## Patentansprüche

1. Zahnbürste oder Zahnbürstenfilament, umfassend ein Polymer mit antimikrobieller Eigenschaft, wobei das Polymer 0,00001 - 10 Gewichtsprozent eines Ionenaustauschers im festen Zustand der allgemeinen Formel
A_{1+x+y}B₂₋ₓCₓ(PO₄)_{3-y}(SiO₄)_{y}
worin
A = ein oder mehrere einwertige Ionen,
B = ein oder mehrere vierwertige Ionen,
C = ein oder mehrere dreiwertige Ionen,
x zwischen 0 und einschließlich 1 liegt und keine ganze Zahl zu sein braucht,
y zwischen 0 und einschließlich 3 liegt und keine ganze Zahl zu sein braucht,
umfaßt.

2. Zahnbürste oder Zahnbürstenfilament nach Anspruch 1, wobei A Silber, Kupfer oder Natrium oder Gemische davon umfaßt.

3. Zahnbürste oder Zahnbürstenfilamentgegenstand nach Anspruch 1 oder Anspruch 2, wobei B Titan, Zirconium, Hafnium oder Zinn umfaßt.

4. Zahnbürste oder Zahnbürstenfilamentgegenstand nach einem der vorangehenden Ansprüche wobei C Aluminium oder Scandium umfaßt.

5. Zahnbürste oder Zahnbürstenfilamentgegenstand nach einem der vorangehenden Ansprüche, wobei A_{1+x+y} mindestens entweder Cu_{0,1} oder Ag_{0,1} umfaßt.

6. Zahnbürste oder Zahnbürstenfilamentgegenstand nach einem der vorangehenden Ansprüche, wobei der Ionenaustauscher AgTi₂(PO₄)₃, AgZr₂(PO₄)₃, Ag_{1,3}Ti_{1,7}Al_{0,3}(PO₄)₃ oder Na_{0,5}Ag_{0,5}Zr₂(PO₄)₃ oder Analoge umfaßt, in denen das Silber teilweise oder vollständig durch Kupfer ersetzt ist.

## Revendications

1. Brosse à dents ou fibre de brosse à dents comprenant un polymère ayant une caractéristique anti-microbienne, le polymère comprenant 0,00001% - 10% en poids d'un échangeur d'ions à l'état solide de formule générale
A_{1+x+y}B₂₋ₓCₓ(PO₄)_{3-y}(SiO₄)_{y}
dans laquelle
A représente un ou plusieurs ions monovalents,
B représente un ou plusieurs ions tétravalents,
C représente un ou plusieurs ions trivalents,
x est entre 0 et 1 inclus, et n'est pas nécessairement un entier,
y est entre 0 et 3 inclus, et n'est pas nécessairement un entier.

2. Brosse à dents ou fibre de brosse à dents selon la revendication 1, dans lequel A comprend de l'argent, du cuivre, ou du sodium ou des mélanges de ceux-ci.

3. Brosse à dents ou fibre de brosse à dents selon la revendication 1 ou la revendication 2, dans lequel B comprend le titane, le zirconium, l'hafnium ou l'étain.

4. Brosse à dents ou fibre de brosse à dents selon l'une quelconque des revendications précéden-tes, dans lequel C comprend l'aluminium ou le scandium.

5. Article de brosse à dents ou de fibre de brosse à dents selon l'une quelconque des revendications précédentes, dans lequel A_{1+x+y} comprend au moins l'un de Cu_{0,1} ou Ag_{0,1}.

6. Article selon l'une quelconque des revendications précédentes, dans lequel l'échangeur d'ions comprend AgTi₂(PO₄)₃, AgZr₂(PO₄)₃, Ag_{1,3}Ti_{1,7}Al_{0,3}(PO₄)₃, ou Na_{0,5}Ag_{0,5}Zr₂(PO₄)₃, ou analogues dans lequel l'argent est partiellement ou totalement substitué avec du cuivre.
